# EUROPEAN PATENT APPLICATION

(11) **EP 1 968 002 A1**
(43) Date of publication of application: **10.09.2008**
(21) Application number: 08152415.9
(22) Date of filing: 06.03.2008
(51) Int. Cl.: G06Q 30/00

(54) **Charging or billing depending on the reaction to an advert received by a user**

(30) Priority: 15.05.2007 GB 0709330; 15.05.2007 GB 0709345; 05.03.2008 GB 0804116; 09.03.2007 WO PCT/FI2007/050130
(71) Applicant: Cvon Innovations Ltd, 22 Ganton Street London W1F 7BY (GB)
(72) Inventor: Aaltonen, Janne, 20900, Turku (FI); Ahopelto, Timo, 00120, Helsinki (FI); Antikainen, Ismo, 02430, Masala (FI)
(74) Representative: McCann, Heather Alison

(57) **Abstract**

System and method for running advertising campaigns for mobile phones. Monitoring the reaction to the received advert and billing the advertiser depending on the reaction. Also includes forwarding the call to a respective telephone number of the advertiser when the subscriber reacts to the advert.
An apparatus receives information regarding communications and messages in a communications network. In response to receiving transmission information relating to a communication from a user terminal, the apparatus determines whether a relevant message containing triggering information e.g. a telephone number has been sent to the user terminal, and sends an output to a telecommunications arrangement in the case that it determines that such a message has been sent. This output can be used to control or otherwise change the telecommunications arrangement.

## Description

### Field of the Invention

The invention relates to telecommunications systems, and particularly to monitoring communications in a communications system.

### Background of the Invention

Mobile marketing is considered by advertisers as the next new channel to reach direct to the user by utilizing the core assets and characteristics of the mobile media: since it is personal, "always on", mobile and naturally forming groups of people who communicate actively with each other. These characteristics combined with social networks-based marketing approach of the Internet could form a very powerful base to execute marketing strategies.

In general, mobile marketing and advertising can be divided into the following four categories:
a) **Mobile Marketing:** The systematic planning, implementing and control of a mix of business activities intended to bring together buyers and sellers for the mutually advantageous exchange or transfer of products where the primary point of contact with the consumer is via their mobile device.
b) **Mobile Advertising:** The paid, public, non-personal announcement of a persuasive message by an identified sponsor; the non-personal presentation or promotion by a firm of its products to its existing and potential customers where such communication is delivered to a mobile phone or other mobile device. Examples of mobile advertising would include: WAP Banner ads, mobile search advertising, mobile video bumpers, and interstitial ads in on device portals.
c) **Mobile Direct Marketing:** Sales and promotion technique in which the promotional materials are delivered individually to potential customers via the potential customer's mobile phone or other mobile device. Examples of mobile direct marketing include the sending of SMS, MMS or WAP push messages, Bluetooth messaging and other interrupt based marketing to mobile phones or other mobile devices.
d) **Mobile customer relation management (CRM):** Combination of all the above in a manner that establishes a long-term, engaging relationship between the customer and the promoting company.

Today's mobile marketing is usually mostly based on push campaigns to opt-in consumer mobile number database, or pull campaigns that acquire mobile phone numbers from consumers. The most typical example of the pull campaign is the "text-to-win" campaign were, e.g., a soft drink bottle contains a short code to be sent via text message to the certain number. In return, the consumer receives a notification if they have won with the selected marketing message or series of messages being broadcasted to their mobile phones. Another popular method is direct advertisement done using text and picture messaging.

The value of the advertisement campaign is significantly higher if there is a way to obtain feedback on sent advertisements from the consumers. The feedback can be direct feedback, such as answering to a query, or indirect, such as purchasing said product or service using coupon or making a phone call.

When an advertiser is selecting the method to use, the key criterion is the estimated impact of the selected marketing activity. Usually the impact is estimated based on (1) how well the desired target audience is identified and reached, and (2) target audience's expected response to the delivered marketing message. Ultimately, marketing impact turns into the advertiser ROI measured via e.g. new product purchases based on the executed campaign, or measured increase in brand recognition or loyalty.

Managing and monitoring messages and communications is an important aspect of ensuring an efficient advertising campaign, and is also important for other aspects of telecommunications, such as allocation of network resources, access control and notification systems.

### Summary of the Invention

In accordance with at least one embodiment of the invention, methods, systems and software are provided for supporting or implementing functionality to provide an output, as specified in the independent claims. This is achieved by a combination of features recited in each independent claim. Accordingly, dependent claims prescribe further detailed implementations of the present invention.

According to an aspect of the invention, there is provided a method for use with a telecommunications arrangement in a telecommunications network, said method comprising:
receiving transmission information indicative of a first communication from a user terminal to a location in said network;
determining whether a message has been sent to the user terminal, the message comprising triggering information for triggering a communication to said location; and
in response to determining that the message has been sent, creating and sending an output to the telecommunications system.

Embodiments of the present invention enable impact of a push message campaign to be tracked and measured, for example. For instance, when an interactive link is contained in a push message (e.g. an SMS message), embodiments of the present invention enables it to be determined if the interactive link is really used, and even perform desired further actions, such as sponsoring, invoicing the campaign based on the success, etc.

### Brief Description of the Drawings

In the following the invention will be described in greater detail by means of exemplary embodiments with reference to the attached drawings, in which
Figure 1 is a block diagram showing components of the present invention and connections therebetween;
Figure 2 is a flow diagram showing the action of a monitoring apparatus according to an embodiment of the present invention;
Figure 3 is a block diagram illustrating a high-level architecture of an exemplary communications system wherein the principles of the present invention may be applied;
Figure 4 is a block diagram illustrating an exemplary monitoring arrangement according to the present invention;
Figure 5 is a flow chart illustrating an example of creating a campaign and sending messages to users;
Figure 6 is a flow chart illustrating an example of an operation of a user terminal;
Figure 7 is a flow chart illustrating an example of an operation of the action tracking component;
Figure 8 is a flow chart illustrating another example of an operation of the action tracking component; and
Figure 9 is a flow chart illustrating still another example of an operation of the action tracking component.

### Detailed Description of the Invention

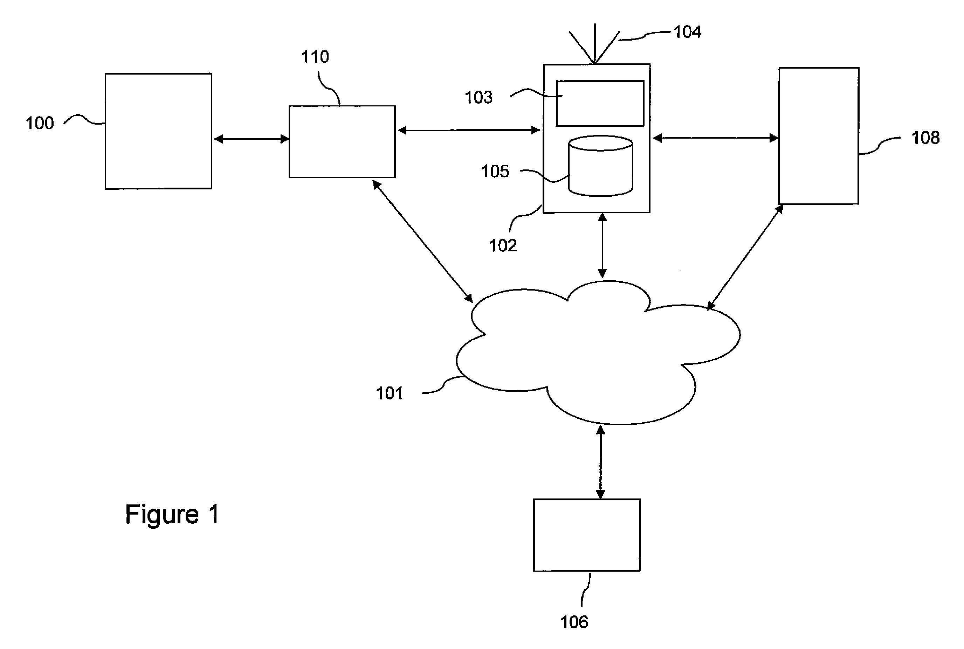

Figure 1 shows a system in which embodiments of the present invention may be implemented. The system includes a user terminal 100, which may be a mobile communications device such as a mobile phone, a personal digital assistant (PDA), a multimedia computer, a personal computer, a lap top, etc., or generally any terminal capable of accessing services, such as content download, web browsing, streaming, Wireless Application Protocol (WAP) browsing. Although there is only one user terminal 100 shown connected with the monitoring apparatus 102 in this example, typically the monitoring apparatus is connected to many such user terminals. The user terminal 100 is capable of communicating with a telecommunications network 101, which may be any cellular, broadcast, wide area, local area or Internet network. Examples of cellular network technologies include but are not limited to GSM, WCDMA, CDMA, GPRS, UTRAN, UMTS, MBMS. Examples of other network technologies include but are not limited to local area networks, such as Wireless Local area networks (WLAN), BlueTooth (BT), and other technologies, such as WiMax (Worldwide Interoperability for Microwave Access), Broadcasting over cellular, Broadcasting over DVB-H (Digital Video Broadcasting - Handhelds), ISDB-T (Terrestrial Integrated Services Digital Broadcasting), DMB (Digital Multimedia Broadcasting). The communication network 4 may also be provided by any generic Internet access using any transport method. The communication network 4 can be also a combination of different communication network technologies.

The user terminal 100 communicates with the network 101 via a network node 110; in particular, it is capable of receiving messages from a sending party 106 via the network and the network node 110. The network node 110 may be an internet gateway or a Short Message Service Center (SMSC), for example. The sending party 106 could be a further user terminal, a messaging management system, as described below, or any other entity capable of sending messages electronically. The messages could be short message service (SMS) messages, multimedia message service (MMS) messages, Instant Message Service (IMS) messages, electronic mail, file downloading or browsing services, such as Wireless application protocol (WAP), Word Wide Web (WWW), audio streaming, video streaming or other data services, etc. In embodiments of the present invention, the sending party sends messages comprising triggering information for triggering the user terminal 100 (or a user thereof) to initiate a communication to a predetermined destination in the network, as will be described in detail below; messages containing triggering information are herein referred to as "triggering messages".

The network node 110 communicates with a monitoring apparatus 102, which comprises a receiver 104, a processor 103 and a database 105; actions of the monitoring apparatus 102 will be described in detail below. The monitoring apparatus is connected to an arrangement 108 to which it issues outputs; examples of the arrangement 108 are described below.

Although the user terminal 100, network node 110, sending party 106, monitoring apparatus 102 and arrangement 108 are all shown separately to the network 101, in many cases one or more of these may be considered to form part of the network 101. Further, although the network node 110 is shown separately to the monitoring apparatus 102, in many cases these may be comprised by the same apparatus. In some cases, the sending party may form part of the same entity and/or be operated by the same party as the monitoring apparatus.

As mentioned above, the sending party 106 sends a triggering message or messages to the user terminal 100. The triggering information in the triggering messages could be an internet link such as a Universal Resource Locator (URL), an email address or a telephone number, for example. Data relating to the triggering messages is also received by the monitoring apparatus; this may be as a result of triggering messages being intercepted by the network node 110, or data relating to messages sent may be separately sent from the sending party 106 to the monitoring apparatus 102, for example; in the latter case, the data may be sent by a link (not shown) which is independent of the network 101.

Data relating to triggering messages is typically stored in the database 105. The data stored may indicate a network location to which the triggering information in a triggering message relates, a user terminal to which it was sent and/or a time at which the message was sent and/or received, for example.

As mentioned above, the user terminal 100 is capable of communicating with the network 101. It may for example initiate a telephone call, send a request for content from an internet server or send an email or SMS message. In some cases, these communications are made in response to receiving messages containing triggering information as described above; in some cases, the communications are independent of such messages. The communications may be a result of manual input by a user of the user terminal 100, or they may be generated without user input.

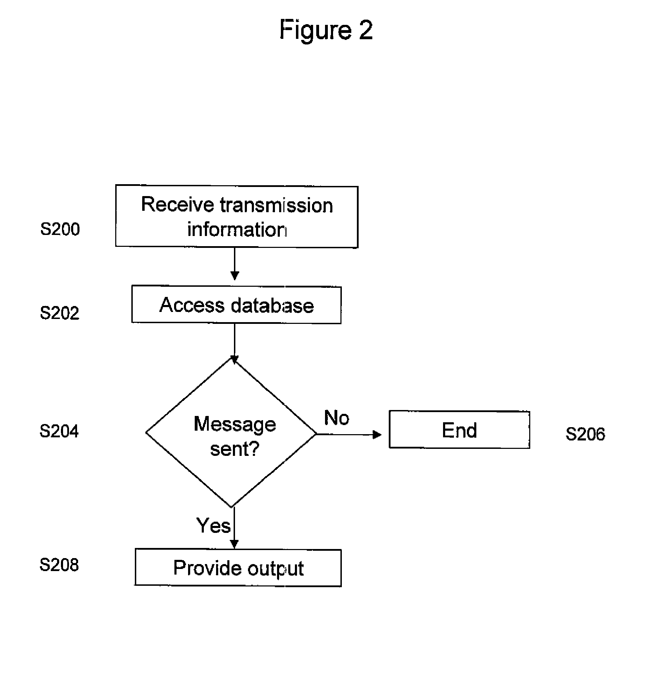

The monitoring apparatus 102 receives information relating to messages received by and communications initiated by the user terminal 100, and issues outputs to the arrangement 108 based on this. Figure 2 shows the action of the monitoring apparatus 102 according to an embodiment of the present invention.

At step S200, the monitoring apparatus 102 receives transmission information indicating a communication from the user terminal 100 to a given location in the network 101. The transmission information may be received substantially concurrently with the communication, the network node 110 providing the transmission information, which may be in the form of, for example, an indication of a destination and/or type of the communication. Alternatively, the transmission information may be received subsequently to the communication; for example, a list of communications made over a given time period could be provided to the monitoring system by the network node 110, or some other entity, such as a billing system. As stated above, in some cases, the transmission information is the communication itself. The transmission information is typically received at the receiver 104 and provided to the processor 103.

At step S202, the monitoring system accesses the database 105, and determines, at step S204 whether a triggering message has previously been sent to the user terminal 100 containing triggering information for triggering a communication to the given network location. This may comprise searching for information relating to a triggering message sent to the user terminal 100 which comprises triggering information for triggering a communication to the given location. In some cases, the database 105 is searched for all previous triggering messages; in some cases, the database 105 is searched for previous triggering messages sent or received within a predetermined time period.

In this example, if the monitoring apparatus 102 determines at step S204 that no triggering message has been sent containing triggering information for triggering a communication to the given network location, then no further action with respect to the given communication is taken by the monitoring apparatus 102, and the process ends at step S206. However, if it is found that such a triggering message has been sent (perhaps limited to a predetermined time period), the monitoring system creates and sends an output to the arrangement 108.

Thus, in many cases, the monitoring apparatus 102 can be said to identify a communication from a user terminal 100 as being a consequence of triggering message received by the user terminal, and, in response to this identification, to provide an output to a telecommunications arrangement 108; this output may be used to control or otherwise cause a change in or action of the telecommunications arrangement 108. Some examples are now provided.

The arrangement 108 could be an entity which controls and/or provides network resources for communications. For example, where the location of the destination of the given communication is an internet content server, the output from the monitoring apparatus 102 could cause the telecommunications arrangement 108 to allocate resources for accessing the content server. This may comprise providing access to the user terminal 100 in preference over other parties attempting to access the content, using for example Integrated Services (IntServ) or Differentiated Services (DiffServ) architecture, which may be particularly useful when attempting to access a content server receiving a high number of access attempts. Allocating resources may additionally or alternatively comprise supplementing an allocated amount of allocated resource for downloading content, so that a subscriber may access the content without the data downloaded being subtracted from an e.g. monthly data allowance.

The arrangement 108 could be an access control apparatus, arranged only to provide access to a content server, or to allow an SMS or email message to be delivered, for example, in the case that it receives a relevant output from the monitoring apparatus 102.

The arrangement 108 could be a notification system. In this case, the sending party 106 may send a message such as an email message to the user terminal 100 containing triggering information for triggering a response to the sending party 106. If the user terminal 100 sends a response, the monitoring system then sends an output to the notification system, causing the notification system to send a notification to the sending party 106 that a response has been sent. Typically the notification will be of a different form to the response; where the response is an email message, the response could be an SMS message, for example.

Although in the example described in relation to Figure 2 no action is taken in response to determining that no relevant triggering message has been sent, in some cases some action may be taken; for example, a predetermined output may be provided to the arrangement 108 indicating, for example, that no resources are to be allocated or that access is to be denied etc.

A detailed example of a system in which an embodiment of the present invention is used with billing system is now provided.

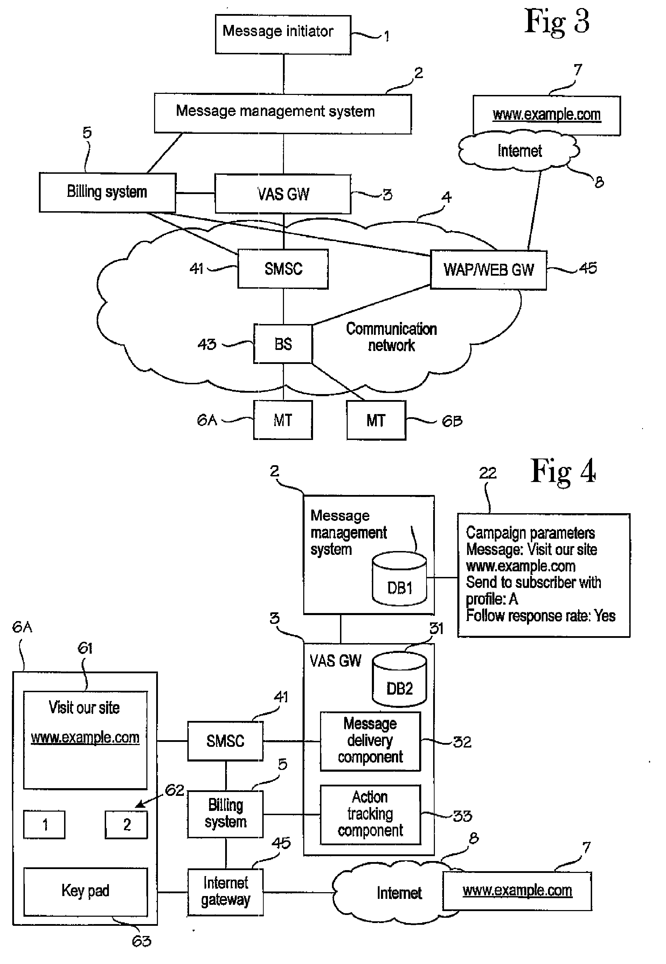

Figure 3 is a block diagram illustrating a high-level architecture of an exemplary communications system wherein the principles of the present invention may be applied. The system shown comprises a message initiator 1 and a message management system 2, which may be considered to correspond to the sending party 106 of Figure 1, a billing system 5 which may be considered to correspond to the arrangement 108 of Figure 1, a Value Added Server Gateway 3 which may be considered to correspond to the network node 110 of Figure 1 and a user terminal 6A which may be considered to correspond to the user terminal 100 of Figure 1.

A message initiator 1 may be any party that wants to send messages. For example, the message initiator 1 could be an advertiser, in which case the messages could relate to, for example, products or services; in some cases, the message initiator could be a private individual. The message initiator 1 defines messages, for example in form of data, text, pictures, audio, video, links, HTML, XML, and/or XHTML to a message management system 2. The message management system 2 manages messaging campaigns and may comprise a content database 21 (Figure 4) which may contain all relevant information for the messaging campaign to be run. For example, the content database 21 may store campaign parameters 22, such as message content, profiles of subscribers using mobile terminals, preferences of when to send messages, to which target group, on which format, a target price level of the message, a target feedback level of the message, demographics of the target audience, a duration of the campaign, etc. The message management system 2 may also be used to maintain rules of the sponsoring communications and/or service access. The message management system 2 may also have tools for the message initiator 1 to define a campaign so that all or some of campaign parameters and the rules may be set, cancelled, modified, updated, or otherwise processed by the message initiator 1. The operator of the message management system 2 may be a party different from the message initiator 1, e.g. the operator of the communications network 4, a message delivery company in business of delivering messages from a plurality of message initiators 1, or any third party. The content management system 2 may be used to keep and maintain rules of the sponsoring of access to web services for the users.

A message is delivered to user terminals 6A and/or 6B via communication network 4. The communication network 4 can be any cellular, broadcast, wide area, local area or Internet network. Examples of cellular network technologies include but are not limited to GSM, WCDMA, CDMA, GPRS, UTRAN, UMTS, MBMS. Examples of other network technologies include but are not limited to local area networks, such as Wireless Local area networks (WLAN), BlueTooth (BT), and other technologies, such as WiMax (Worldwide Interoperability for Microwave Access), Broadcasting over cellular, Broadcasting over DVB-H (Digital Video Broadcasting - Handhelds), ISDB-T (Terrestrial Integrated Services Digital Broadcasting), DMB (Digital Multimedia Broadcasting). The communication network 4 may also be provided by any generic Internet access using any transport method. The communication network 4 can be also a combination of different communication network technologies.

The type and format of messages as well as the delivery method used may be selected among those available in the communication network 4 employed. There may also be provided a value added service gateway (VAS GW) 3 that connects the communication network 4 or some of the elements thereof to the message management system 2. The VAS gateway 3 may also be connected to a billing system 5. The VAS gateway 3 may include a message delivery component 32 (Figure 4) for sending messages to the customers through the communications network 4. The VAS gateway 3 may also include a database 31 and an action tracking component 32 which will be described below.

A billing system 5 represents any real-time billing system or close-to-real-time billing system that may be employed for monitoring the usage of the communication services in the communications network 4. Services, i.e. communication events, may include but are not limited to voice, messaging services (Short Message Service, Multimedia Message Service, Instant Message Service, Electronic mail services), video telephony services, push to talk services, data services such as Internet or Wireless Application Protocol (WAP) browsing services, content usage (television, radio, video) services, download services. The billing system 5 may also refer to any 3^{rd} party offered service running in a server or a computer system, such as a proxy server or a web server which offers services to mobile users. The billing system 5 may receive charging records from other network elements, each charging record comprising all information required for the billing of a given communication by a user in the communications network, possibly excluding price information. A charging record may specify the content and format of the file that is delivered to the billing system 5. Charging records are often referred to as call detail records (CDRs) or charging data records, or service detail records (SDRs) in value added services. The charging records may include not only the user's calling or originating number/address or similar identity but also a destination of the communication, for example, a called telephone number of a communication, an Uniform Resource Locator (URL) or similar network address accessed via the communication network 4, a telephone number or network address number to which a message is sent, etc. The information can be delivered to the billing system 5 from any communication network element handling a given communication, such as via a short message service center (SMSC) handling SMS messages of a user, a multimedia message service center (MMSC) handling MMS messages of a user, Wireless application protocol gateway (WAP-GW) handling a WAP communications of a user, and an Internet access point (Internet AP), a serving GPRS support node (SGSN), a gateway GPRS support node (GGSN), etc.

A content server 7 represents any destination server or application or node in the web where one or more of the web services are hosted. Examples of web services include but are not restricted to a web page, an MP3 file download, a video download, a picture download, a music download, a document download, a streaming service, a video service, a music service, a messaging service, such as electronic mail, XML, HTML, a search service, such as Google or Yahoo, or generally any digital content or service which can be accessed with a mobile terminal in question.

In the example of Figure 4, the communication network 4 comprises a cellular network is shown with exemplary network elements, such as a base stations (BSs) 43 and 44, a Short Message Service Center (SMSC) 41 and a WAP or web gateway 45.

Further, although in this example the database 31, the message delivery component 32 and the action tracking component 33 are situated at a value added gateway, the invention is not limited to this arrangement. Functionalities similar to the database 31, the message delivery component 32 and the action tracking component 33 may be embodied in a dedicated network entity, or in any appropriate existing network entity, within or outside the communication system 4, such as a short message service center (SMSC), a multimedia message service center (MMSC), Wireless application protocol (WAP) gateway (WAP-GW), an Internet access point (Internet AP), a WLAN access point (AP), a mobile switching center (MSC), a charging gateway, a billing gateway, a message management system, a server, or in a control intelligence associated with such network entities, such as in a service control point (SCP) of an intelligent network (IN). Moreover, the functionalities similar to the database 31, the message delivery component 32 and the action tracking component 33 may not be embodied in the network entity but they may be distributed between two more network entities.

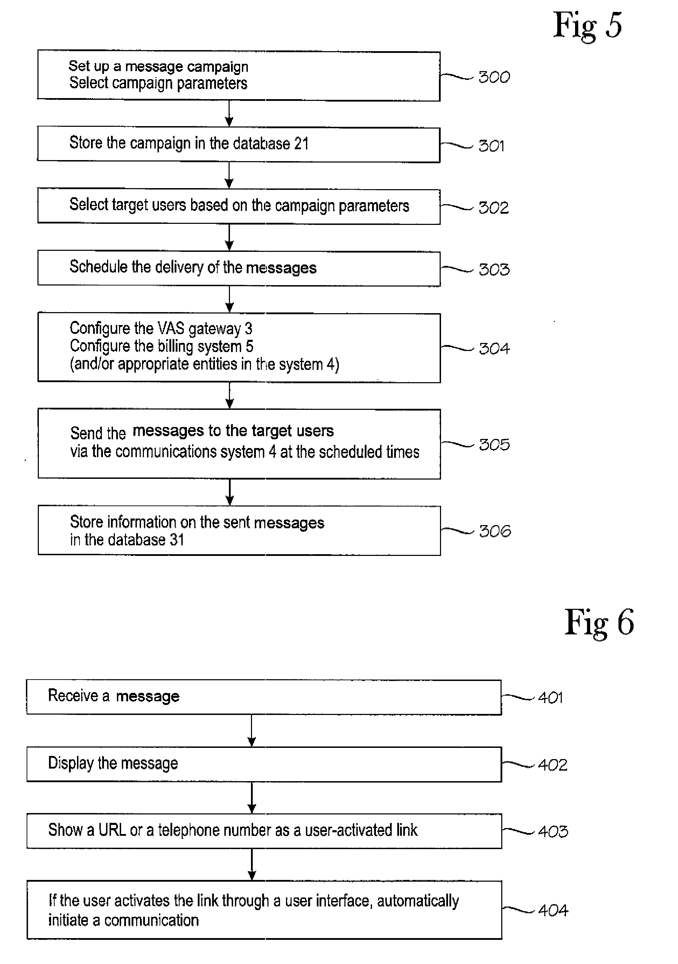

Referring now to Figure 4, message delivery according to some embodiments of the invention is now illustrated by means of an example. The message initiator 1 sets up the messaging campaign in the message management system 2 (step 300 in Figure 5). The campaign setup may include selection of one or more campaign parameters, e.g. a target user profile or a given user or a given group of users (e.g. subscriber numbers), message content, an indicated or sponsored destination (e.g. telephone number/internet site), a sponsoring/campaign budget, status of the user, a list of web sites and services which are sponsored for given users, an allowed number of accesses to a sponsored content, a number of accesses already made to a sponsored content, a location of a user, historical data of a user's behavior, historical data on a behavior of a profile of users, information relating to messages sent to a user, information relating to the content of vouchers/coupons sent to a user, codes of vouchers/coupons sent to a user, etc. and/or other appropriate campaign parameters 22 which are stored in the database 21 (step 301 in Figure 5). In the example shown Figure 4, the message content comprises "Visit our site www.example.com to obtain benefits". Another example of a message is "Call our customer service to number +35840123456". In these examples, the message triggers a user or user terminal to originate a communication (a call or web browsing, respectively) to a predetermined destination. In the example of Figure 4, the campaign parameters 22 also define that the message shall be sent to a subscriber or subscribers having a user profile A. The campaign parameters may further define that a response rate of the users to the message shall be followed.

According to an embodiment of the invention, the message initiator 1 may configure the message management system 2 to send messages directly to given users, e.g. to predetermined telephone numbers.

Based on the user profile A and/or other campaign parameters, the message management system may determine to which given user(s), i.e. the target user(s), the message is to be delivered (step 302 in Figure 5). For example, a user terminal 6A with subscriber number +35840111111 matches to the user profile A, and therefore sending of the message is scheduled at 12:00 a.m. at a given day (step 303 in Figure 5). On the other hand, a user 6B with subscriber number +35840222222 does not match the user profile A, and is not selected as a target consumer. In an embodiment where the message is delivered via a VAS gateway 3, the message management system 2 may program the campaign to the message delivery component 32 of the VAS gateway for execution (step 304 in Figure 5). The programming may include the identity of the user(s), such as the subscriber number, the network address, etc., to which the message is to be sent, and the actual message. Also the billing system 5 and/or appropriate network entities of the communication system 4 may be configured according to the campaign parameters at this point. The VAS gateway sends the message(s) via the communications network 4 to the target user(s) at defined times (step 305 in Figure 5). After sending the message(s), the VAS gateway 3 stores in the database 31 at least information identifying the target user(s), such as the subscriber number, the network address, etc., to which the message was sent, and information identifying the destination, such as the telephone number, the network address, the URL, to which the user is triggered to initiate a communication in the message (step 306 in Figure 5). In an embodiment of the invention, the whole message is stored also after sending the message. The message may be originated (push message) in the example above, or it may be pulled by the terminal (a pull message). The message may also originate from another user or user terminal as will be illustrated below.

As described above, the message can be delivered as any type of message, such as an SMS, an MMS, a Push WAP message or a WAP page or a Web page containing a link, etc. In the example shown in Figure 4, the message may be an SMS based message sent from the message delivery component 32 via the SMSC to the mobile terminal 6 at the scheduled time.

In some embodiments of the invention, in addition to messages sent from the message management system 2 to a user terminal, the message content may be added on communication messages exchanged between users via the communication network 4. The action tracking component 32 may be programmed for this operation at the step 304 in Figure 5. For example, a message "Hi there." from a user A to a user B may be tagged with extra information, such as "Visit www.example.com to find best places". In this example, the message received by the user B would then be "Hi there. Visit www.example.com to find best places". In some embodiments, in addition to the message management system 2 providing the triggering messages, a triggering message may also comprise a link and another tag already included in a message sent from a user to another, i.e. the present invention is not limited to triggering messages generated by message management systems. The action tracking component 32 may be programmed for this operation at the step 304 in Figure 5. For example, a message sent from a subscriber A to a subscriber B may be: "Hi have you checked this site wap.example.com?". A typical case could be then a subscriber A first receives a message from the messaging management system 2 and then forwards the message to a subscriber B.

The mobile terminal of the target user 6A receives the message (step 401 in Figure 6) that is displayed to the user via a user interface, such as a display 61 (step 402). An application in the mobile terminal may automatically detect that there is an URL or a telephone number in the content of the message, and the URL or the telephone number may be displayed as a user-activatable link (step 403). In the example shown in Figure 4, the URL "www.example.com" is displayed as a link. Then the user activates the link through the user interface, e.g. using soft keys 62 or a keypad 63, an application in the mobile terminal automatically initiates a communication to the URL or the telephone number or similar destination (step 404). Let us assume that the user 6A selects the link "www.example.com", initiates a communication to the web site via an Internet gateway 42 and browses the web site after receiving the triggering message, for example at 12:14 p.m. at the same day.

The Internet gateway 42, or any other appropriate network element (a short message service center SMSC, a multimedia message service center MMSC, Wireless application protocol gateway WAP-GW, and an Internet access point, a serving GPRS support node SGSN, a gateway GPRS support node GGSN, a mobile switching center MSC, etc.), provides a charging record for the communication, and the charging record is delivered to the billing system 5. The billing system provides the charging record further to the VAS gateway. Alternatively, the charging record may be provided directly to the VAS gateway 3.

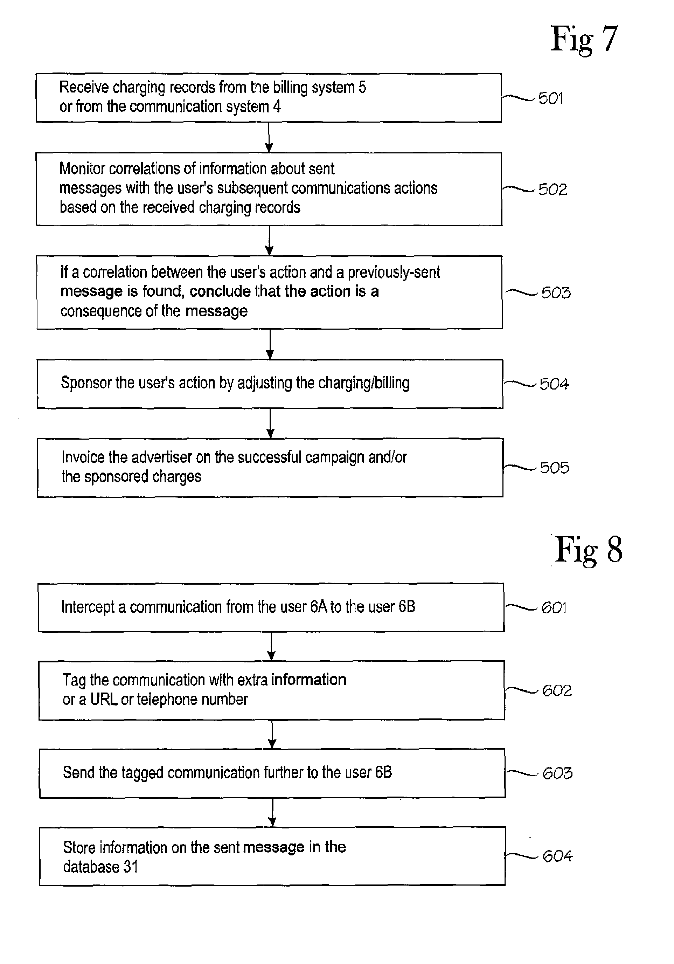

The VAS gateway receives the charging records (step 501 in Figure 7). The action tracking component 33 in the VAS gateway 3 is arranged to monitor correlations of information about sent messages with the users' subsequent communications actions based on information gathered from the communication network 4 (step 502 in Figure 7). If the correlation between the user's action and a previously sent triggering message is found, the action tracking component 33 may conclude that the communications action is a consequence of the triggering message, i.e. the message generated an action (step 503 in Figure 7). The information on the users' subsequent communications action may especially include the destination of the communications events, such as URLs to which the users are accessing, telephone numbers to which the users are calling, or telephone numbers or email addresses to which the users are sending messages, etc. The information on the users' communications events may be obtained, for example, from the charging records obtained from the billing system 5 or directly from another appropriate network element. The information on the triggering messages sent to the customers is stored in and obtained from the database 31. The database 31 may also contain a flag indicating that a response or reaction to a given triggering message shall be followed or tracked. In general, the sent message information in the database 31 may alternatively relate to other kinds of triggering messages sent to the customers, e.g. results of search query or other means of delivering information on selectable links to a mobile terminal.

The action tracking component 33 may compare the information in the database 31 with the communications event information periodically, on request, or on real-time basis. In the example described herein, the action tracking comparison is performed also for the subscriber number +35840111111 of the user terminal 6A which has been sent the message "Visit our site www.example.com". Based on the communications event information obtained, such as the charging records, the comparison in the action tracking component 33 finds that the user 6A has started a browsing session to the same URL which was attached to a messages, i.e. www.example.com. The action tracking component 33 may check also other criteria, e.g. that the subsequent communications event occurred within a predetermined period of time from the sending moment of the message. In the example described herein, the browsing took place relatively close to a time of sending of the message (during the same day), and the action tracking component registers the browsing session as a successful response to the sent message. The registered successful response may be stored in the database 31 for subsequent use, such as statistics, billing of the message initiator 1 for the message and/or data transfer cost or other cost relating to action made by the subscriber, etc., or it may be used or forwarded in real-time.

In an embodiment of the invention, the registered successful response may result in sponsoring the communications event and/or a related service to the user (step 504 in Figure 7). The sponsoring may comprise one or more of the following adjustments of the charging: a communication and/or a related service free of charge; a communication and/or a related service with a discounted charge; a communication and/or a related service with an extra benefit. In the example described herein, as the browsing took place on the link www.example.com provided by the message, the action tracking component 33 may create and send an output to the billings system 5 to notify the billing system 5 not to invoice the user 6A for the data cost of the browsing session or to subsidize the session.

In a further embodiment of the invention, the billing system 5 may be configured beforehand not to invoice any of the browsing on the links delivered to a user in the messages. In the example described herein, the rules for billing may be set to not invoice any browsing from the subscriber 6A to the URL/IP addresses www.example.com. The billing rules can include further parameters, e.g. the time for which the billing is set to 0, the number of times the URL can be accessed for free, the number of sub-pages which can be accessed (and their URLs / IP addresses), etc. In a further embodiment of the invention, since the comparison can verify that the link in the sent message resulted in click-through type of action, the success information in the action tracking component 33 can be used to further invoice the message initiator 1 on the successful campaign and/or to invoice the amount of data transferred in the session of accessing www.example.com and related sub-pages (step 505 in Figure 7).

Let us further assume that the user 6B initiates a browsing session to the same URL www.example.com. Information on this communications event may also be provided to the action tracking component 33 in a manner similar to the information regarding the user 6A above. Since no message was sent to the user 6B, the action tracking component 33 may not perform any comparison. Even if the action tracking component would compare the communications event data of the user 6B with the information in the database 31, no correlation would be found since the database 31 does not contain information which links the subscriber number +35840222222 with the URL www.example.com. Therefore, browsing session of the user 6B is not registered as a successful response to the sent message. As a result, the browsing to the URL www.example.com is not subsidized or fully paid or sponsored by the message initiator 1.

In some cases, the messages may also include identifiers, such as return addresses for communications triggered by the messages. The return addresses may be an address of the VAS gateway 3. These identifiers can be associated with a user terminal to which a respective message is sent, and this association or an indication thereof stored in the database 31. Transmission information indicative of a communication may then contain an indication of the identifier; the VAS gateway 3 can then vary a subsequent action on the basis of this identifier. For example, the messages may contain questions which form part of a survey by a given party. When a response communication from a user terminal containing a response to a question is sent using the return address, the VAS gateway 3 identifies the association between the return address and the user terminal, and sends the question response to the given party, for example. Since the return address (or other identifier) identifies the given party, it may be arranged so that the response communication is sponsored by the given party, with a different party performing the sponsoring depending on the return address used.

The return addresses may be dynamically allocated to the user addresses from a predetermined limited sender address space such that the same return address can be allocated at the same time to more than one return address with different defined actions and with different charging rules. The sender addresses may be dynamically allocated to the user addresses from a predetermined limited address space with a round robin scheme.

### A further example

The message management system 2 may be configured to send a message "Call us on +35840123456", for example, to the user 6A with the subscriber number +35840111111 at 12:00 a.m. at a given day. The message is not sent to the user 6B with the subscriber number +35840222222. Let us assume that the user 6A selects the link and makes a call to the number +35840123456 after receiving the SMS, for example at 12:14 p.m. at the same day.

In a similar manner to that with URL link of the example described above, the charging records or similar information related to the communication behavior of the user 6A are analyzed in the action tracking component 33. If there is a call from number +35840111111 to +35840123456, we can suppose that the call was initiated because of the message previously sent to the user 6A. According to embodiments of the invention, the call from the user 6A to the number +35840123456 may be free of charge or subsidized. If the user 6B calls to the same number +35840123456, the action tracking component 33 will not find any correlation with the sent information, since there was no message addressed to the user 6B. Therefore, we can suppose that the call from +35840222222 to +35840123456 was not initiated because of the messaging campaign. Thus, the user 6B is billed normally for his call. According to an embodiment of the invention, the free of charge or subsidized call is provided by adjusting the balance of the user 6A in the billing system 5. According to further embodiment of the invention the message initiator 1 may be invoiced according to a "click to call" price for a successful response, and the message initiator 1 may also be invoiced to cover a cost of the phone call. This type of triggering and monitoring procedure according to the invention may be employed to build up a "toll free number" type of service.

### A further example

In some embodiments of the invention, in addition to messages sent from the message management system 2 to a user, triggers such a URL link or a telephone number, may be added to messages exchanged between users via the communication network 4. For example, a message "Hi there." from a user 6A to a user 6B may be intercepted and tagged with extra triggering information (steps 601, 602 and 603 in Figure 8), such as "Visit www.example.com to find best places", or "Call us +35840123456" in the VAS gateway 3. In this example, the message received by the user 6B would then be "Hi there. Visit www.example.com to find best places", or "Hi there. Call us +35840123456". When selecting messages to be tagged, the VAS gateway 3 may apply campaign parameters and rules similar to those used in the embodiments and examples described above. For example, the user B may be selected as a target user based on a user profile. The VAS gateway may store information needed for the action tracking in the database 31 (step 604 in Figure 8) in a manner similar to that used in the above embodiments and examples, except that the target user receiving the message is now the user 6B. If the user subsequently makes an action to call to the number +35840123456 or initiate a browsing session to www.example.com, the charging records or similar information related to the communication behavior of the user 6B are provided to and analyzed in the action tracking component 33, for instance in the same manner as illustrated in steps 501 to 505 in Figure 7. If there is a call from number +35840222222 to +35840123456 or a browsing session from +35840222222 to www.example.com, the action tracking component 33 can suppose that the call or browsing session was initiated because of the message previously sent to the user 6B. The observed successful response to the message may further result in further actions e.g. regarding the billing in a manner similar to that used in the above embodiments and examples.

### A further example

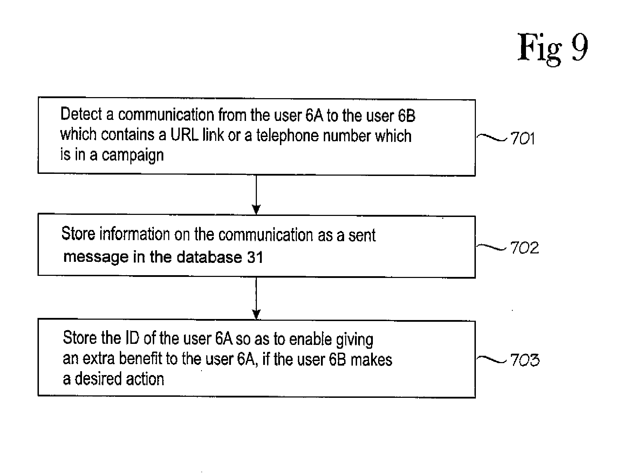

According to an aspect of the invention, a message to a user may be an arbitrary message from a one subscriber to another. More specifically, the message initiator 1, the message management system 2, or the VAS gateway 3 does not insert any triggering information to the message. According to an embodiment of the invention, a network entity, such as an archive server, is provided which is monitoring or collecting all the messages sent between the users. Such network entity may be the action tracking component 33. The database 31 may contain information on the destinations, such as address links or telephone numbers which are in a messaging campaign. Let us assume www.example.com is such a destination and is stored in the database 31. Let us further assume that the user 6A spontaneously sends a message "Check this out www.example.com to the user 6B as to tell about an interesting site. The action tracking component 33 may be set to monitor messages sent between subscribers to find if there are links or telephone numbers embedded. If the action tracking component 33 finds out (e.g. based on comparison of the charging records or similar information related to the communication behavior of the users with the campaign information in the database 31) that a message contains a link or a telephone number which is in a messaging campaign (step 701 in Figure 9), the subsequent actions of the user 6B may be tracked in a similar manner to the behavior of target users in the above embodiments and examples. The action tracking component may store information needed for the action tracking in the database 31 in a manner similar to that used in the above embodiments and examples (step 702 in Figure 9), except that the target user receiving the message now is the user 6B. The action tracking component 33 may also store identification information (e.g. the subscriber number) of the user 6A (step 703 in Figure 9). The action tracking component 33 further analyses the actions from the receivers in respect to these arbitrary messages. In this example, the user 6B browses the link www.example.com, and the charging records or similar information related to the communication behavior of the user 6B are provided to and analyzed in the action tracking component 33. As there is a browsing session from +35840222222 to www.example.com, the action tracking component 33 can suppose that the browsing session was initiated because of the message previously sent to the user 6B from the user 6A. The observed successful response to the message may further result in further actions e.g. regarding the billing in a manner similar to that used in the above embodiments and examples. According to an embodiment of the invention, the subscriber 6A may be credited with an extra benefit, such as with extra talk time or messaging, for having promoted the web site. According to an embodiment of the invention, the owner of web site "example.com" may be invoiced since the visit to site was initiated in the network. This aspect of the invention is particularly useful on following the responses on the forwarded messages.

### A further example

According to an aspect of the invention, an arbitrary user may wish to establish a "free" number or a "free" browsing opportunity for another person. For example, a parent may wish to define that calls to a home telephone number are free of charge for his son. The arbitrary user (e.g. a parent) may then use the message management system 2 to create a "campaign" for the desired/target user (e.g a son) and the desired number (e.g. a home number) or link in a similar manner as in the embodiments and examples described above. When the desired/target user makes a communication to the triggered destination, the action tracking component 33 will detect this and adjust the billing, for example.

The techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

It will be obvious to a person skilled in the art that, as the technology advances, the inventive concept can be implemented in various ways. The invention and its embodiments are not limited to the examples described above but may vary within the scope of the claims.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for use with a telecommunications arrangement in a telecommunications network, said method comprising:
receiving transmission information indicative of a first communication from a user terminal to a location in said network;
determining whether a message has been sent to the user terminal, the message comprising triggering information for triggering a communication to said location; and
in response to determining that the message has been sent, creating and sending an output to the telecommunications arrangement.

2. A method according to any preceding claim, wherein said telecommunications arrangement comprises apparatus for allocating network resources.

3. A method according to claim 2, wherein the output causes the telecommunications arrangement to allocate a resource to the user terminal.

4. A method according to claim 3, wherein the resource is allocated for said communication.

5. A method according to any preceding claim, wherein the telecommunications arrangement comprises a billing system.

6. A method according claim 5, wherein the output results in a change in a billing record.

7. A method according to any preceding claim, wherein the telecommunications arrangement comprises a notification system.

8. A method according to claim 7, wherein said output results in said notification system sending a notification.

9. A method according to claim 8, wherein said notification is sent to a sending party of said message.

10. A method according to any preceding claim, wherein said location comprises a further user terminal.

11. A method according to any preceding claim, wherein the telecommunications arrangement comprises an access control system.

12. A method according to claim 11, wherein the output results in the access control system granting access to said location.

13. A method according to any preceding claim, wherein determining whether a message has been sent comprises accessing a database, the database comprising information relating to messages comprising triggering information.

14. A method according to any preceding claim, wherein said triggering information comprises one or more of: a uniform resource locator (URL); a telephone number; and an electronic mail address.

15. A method according to any preceding claim, comprising generating said message, said generating comprising:
intercepting a message to said first user terminal;
modifying the message to include said triggering information; and
sending the modified message to the user terminal.

16. A method according to claim 15, comprising storing information indicating that said modified message information has been sent to said user terminal.

17. A method according to claim 16 dependent on claim 13 comprising storing said information in said database.

18. A method according to any preceding claim, comprising:
intercepting a message to the user terminal;
determining whether the message comprises triggering information; and
in response to determining that the message comprises triggering information, storing information indicating that said triggering information has been sent to said user terminal.

19. A method according to claim 18 dependent on claim 13, comprising storing the information in said database.

20. A method according to any preceding claim, comprising:
including an identifier in and sending said message;
associating said identifier with said user terminal;
storing an indication of said identifier; and
determining whether said transmission information comprises an indication of said identifier,
in which said output is based on whether the transmission information comprises an indication of said identifier.

21. A method according to claim 20, in which the identifier is comprised by the triggering information.

22. A method according to either of claim 20 and claim 21, in which the identifier comprises a destination address for said communication.

23. An apparatus for use with a telecommunications arrangement in a telecommunications network, comprising:
a receiver configured to receive transmission information indicating a first communication from a user terminal to a destination in a communications system;
an information processor configured to:
determine whether a message has been previously sent to the user terminal, the message comprising triggering information for triggering a communication to said location; and
create and send an output to the telecommunications arrangement in the case that said message has been sent.

24. An apparatus according to claim 23, arranged to access a database containing information relating to messages comprising triggering information and thereby determine whether the message has previously been sent to the user.

25. An apparatus according to either of claim 23 and claim 24, wherein said telecommunications arrangement comprises a system for allocating network resources, and said output causes said system to allocate a resource.

26. An apparatus according to any of claim 23 to claim 25, wherein said telecommunications arrangement comprises a billing system and said output results in a change in a billing record.

27. An apparatus according to any of claim 23 to claim 26, wherein said telecommunications arrangement comprises a notification system, and said output results in the notification system sending a notification.

28. An apparatus according to any of claim 23 to claim 27, wherein said telecommunications arrangement comprises an access control system and said output results in the access control system granting access to the location.

29. An apparatus according to any of claim 23 to claim 28, arranged to modify a message to said user terminal such that said message comprises said triggering information.

30. An apparatus according to any of claim 23 to claim 29 comprising a store for storing information indicating that said message has been sent to said user terminal.

31. A computer program product containing executable instructions which, when implemented, cause a computing device to perform the method of any of claim 1 to claim 22.
